# EUROPEAN PATENT APPLICATION

(11) **EP 3 434 394 A1**
(43) Date of publication of application: **30.01.2019**
(21) Application number: 17182716.5
(22) Date of filing: 24.07.2017
(51) Int. Cl.: B22F 3/105, B33Y 10/00, B33Y 30/00, B29C 64/153

(54) **THREE-DIMENSIONAL OBJECT SHAPING METHOD**

(71) Applicant: Matsuura Machinery Corporation, Fukui City Fukui (JP)
(72) Inventor: AMAYA, Kouichi, Fukui City, Fukui (JP); ISHIMOTO, Kousuke, Fukui City, Fukui (JP)
(74) Representative: Lambacher, Michael

(57) **Abstract**

In order to achieve efficiently forming powder layers by improving the squeegee sliding speed in a three-dimensional object shaping method, there is provided a three-dimensional object shaping method comprising:
a powder layer forming step, sliding step of a squeegee on the supplied powder, and a sintering step of irradiating the powder layer, are successively repeated,
wherein after dividing shaping regions into a plurality of laminating units, each laminating unit of the plurality of laminating units are divided into inside region including the maximum prearranged sintering region, and outside region not including the maximum prearranged sintering region, and
wherein the squeegee sliding speed in the outside region is set to be greater than the sliding speed in the inside region.

## Description

### [Technical Field]

The present invention relates to a three-dimensional object shaping method carried out by laminating sintered layers by successive repeated formation of powder layers and formation of sintered layers by irradiation of a light beam or an electron beam.

### [Background Art]

In the step of forming the aforementioned powder layer, smoothing by sliding of a squeegee against the powder supplied into the shaping chamber, i.e. squeegeeing, is considered indispensable.

In the prior art, however, the squeegee sliding speed has been kept uniformly constant over all of the laminating regions along the height direction.

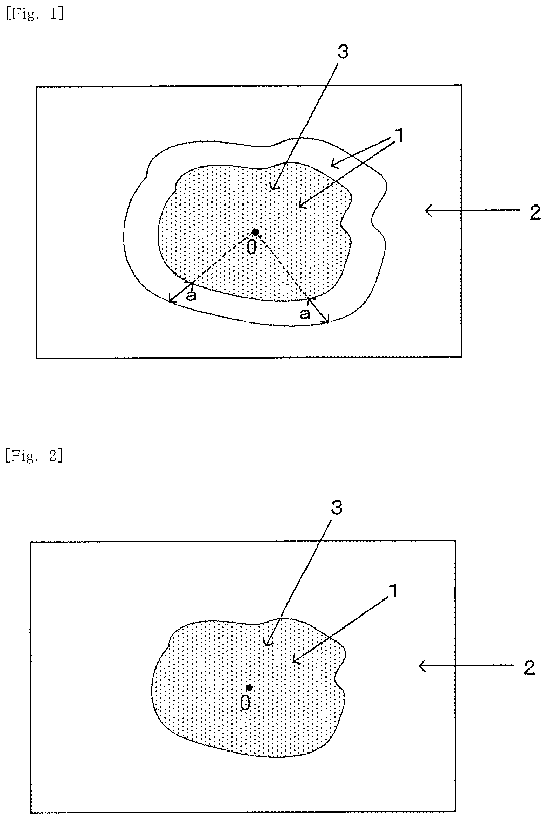

In fact, Patent Document 1 discloses sliding with a squeegee on a shaping table 10 for which powder is supplied by a powder supplying device 40 (Fig. 1 and paragraph [0031]), but this is without any particular variation of the sliding speed.

Similarly, Patent Document 2 also describes squeegee sliding as an indispensable step (Abstract), but nowhere mentions changing the squeegee sliding speed particularly.

In the prior art of such as Patent Documents 1 and 2, although the inside region including prearranged sintering region and the outside region not including them are set to a uniformly equal sliding speed, the outside region where sintering is not to be performed does not need to be set to the same level of sliding speed as the regions including the prearranged sintering regions.

Therefore, in the prior art, since the outside region that does not include the prearranged sintering region is set to an unnecessary low speed, the squeegeeing of the prior art has been extremely inefficient.

In order to overcome this inefficiency, an improved technique may be considered in which the regions where squeegee sliding is to be carried out are divided into a rectangular inside region that includes the prearranged sintering regions in a uniform manner along the entire height direction, and the region outside it, and the squeegee sliding speed in the outside region is set to be greater than the sliding speed in the inside region.

However, since the sintering regions usually vary sequentially in the height direction according to each laminating unit, in the improved technique described above as well, where the squeegee sliding speed is set to be lower in a wide rectangular inside region that does not correspond to the prearranged sintering regions, it is not possible to avoid the inefficiency of squeegee sliding being carried out in an inefficient manner.

### [Prior Art Documents]

### [Patent Documents]

Patent Document 1: Japanese Published Unexamined Patent Application No. 2015-199197
Patent Document 2: Re-publication of PCT International Publication WO No. 2012-160811

### [Summary of Invention]

### [Technical Problem]

The problem to be solved by the present invention is to achieve efficiently forming powder layers by improving the squeegee sliding speed in a three-dimensional object shaping method.

### [Solution to Problem]

In order to solve the aforementioned problem, a basic construction of the invention is:
a three-dimensional object shaping method comprising:
   a powder layer forming step based on supply of a powder to a shaping chamber and smoothing that results from sliding of a squeegee on the supplied powder, and a sintering step of irradiating the powder layer with a light beam or electron beam and moving the position of irradiation, are successively repeated in that order to laminate sintered layers,
   wherein after dividing shaping regions into a plurality of laminating units along a height direction, a maximum prearranged sintering region, formed by superimposing all of the prearranged sintering regions in each laminating unit of the plurality of laminating units, is used as the basis, and each laminating unit of the plurality of laminating units is divided into an inside region including the maximum prearranged sintering region, and an outside region not including the maximum prearranged sintering region, and
   wherein the squeegee sliding speed in the outside region is set to be greater than the sliding speed in the inside region.

### [Advantageous Effects of Invention]

In the basic construction described above, as a result of dividing the inside region including the maximum prearranged sintering region formed by superimposing the sintering regions in each laminating unit at each of the plurality of laminating units divided along the height direction, and the outside region not including the maximum prearranged sintering region, the inside region and outside region are successively varied depending on the height direction, and wide outside region is thereby established, whereby squeegee sliding can be carried out at the necessary low speed for achieving a precise flat shape in the inside region, while squeegee sliding can be carried out at a pretty high speed for rough flatness in the outside region.

As a result, it is possible to accomplish efficient squeegee sliding, in other words, squeegeeing.

### [Brief Description of Drawings]

Fig. 1 is a plan view showing the features of Example 1 founded on the basic construction. Point O represents the center position of the sintering region or maximum sintering region.
Fig. 2 is a plan view showing the features of Example 2 founded on the basic construction. Point O represents the center position of the sintering region or maximum sintering region.
Fig. 3 is a flow chart showing the process for the basic construction.

### [Description of Embodiments]

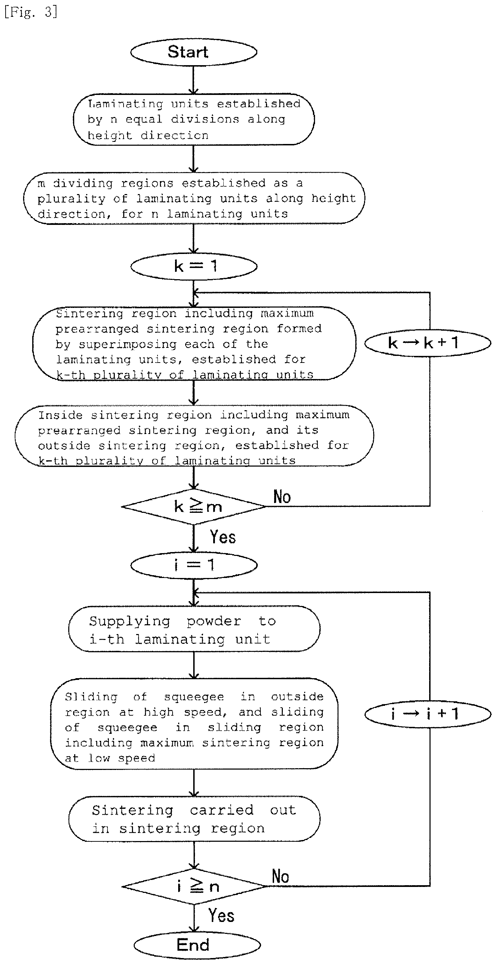

As shown in the flow chart of Fig. 3, according to the basic construction, a plurality of laminating units are divided along the height direction beforehand according to a program, and the maximum prearranged sintering region, formed by superimposing all of the prearranged sintering regions 3 for each laminating unit of the plurality of laminating units based on the divisions, are used as the basis , and each laminating unit is divided into the inside region 1 including the maximum prearranged sintering region and the outside region 2 not including the maximum prearranged sintering region.

In each of the plurality of laminating units, after which supplying of powder, sliding with a squeegee and each sintering procedure are repeated in succession to accomplish the lamination necessary for three-dimensional shaping, and during this time the squeegee sliding speed in the outside region 2 is set to be greater than the speed in the inside region 1.

Thus, according to the basic construction, division into the inside region 1 and the outside region 2, and setting of the different speeds, allow the aforementioned effect of the invention to be exhibited.

The shape of the inside region 1 is not specified for the basic construction.

Consequently, rectangular shape may be adopted as in the prior art, or circular shape may be adopted.

Rectangular region is advantageous in that the range of sliding by reciprocation of the squeegee is uniform, and the division is made more simple.

Circular shape, on the other hand, is advantageous in that it can set inside region 1 more compact than it of rectangular shape, therefore allows the outside region 2 to be wider and moreover allows more efficient squeegeeing.

A description will be given as below according to Examples.

### [Example 1]

In the case of Example 1, as shown in Fig. 1, each location on the border between the inside region 1 and the outside region 2 has a length of a prescribed distance "a" along a line connecting the center location of the maximum prearranged sintering region and each location on the outer periphery, with respect to the respective locations on the outer periphery of the maximum prearranged sintering region.

In the case of Example 1, the inside region 1 is set to have a longer distance than the sintering region 3 by a prescribed width "a" from the center location along the direction of each line beyond each location on the outer periphery, thereby allowing a more compact inside region 1 to be established compared to the aforementioned circular inside region 1, and allowing even more efficient squeegeeing to be accomplished.

Note that the distance that is longer by "a," as shown in Fig. 1, can be assessed by CAM, after previously setting the locations on the outer periphery of the sintering region 3 by CAD.

### [Example 2]

In the case of Example 2, as shown in Fig. 2, the maximum prearranged sintering region 3 and the inside region 1 are equivalent in each of the plurality of laminating units.

Thus, in Example 2 where the sintering region or maximum sintering region 3 is equivalent to the inside region 1, all of the region outside the sintering region 3 corresponds to the outside region 2, thereby allowing squeegeeing to be accomplished even more efficiently than Example 1.

However, since the shape of an actual three-dimensional object must be cut from further outside than the sintering region 3, the maximum sintering region 3 of each of the plurality of laminating units that have been divided must be set to regions that are wider by a prescribed degree than the original shaping regions.

### [Industrial Applicability]

Thus, since the present invention accomplishes efficient squeegeeing and thus allows efficient shaping of three-dimensional objects to be ensured, it can contribute to a wide range of applications in the technical field of three-dimensional shaping.

### [Reference Signs List]

- 1:: Inside region
- 2:: Outside region
- 3:: Sintering region or maximum sintering region

## Claims

1. A three-dimensional object shaping method comprising:
a powder layer forming step based on supply of a powder to a shaping chamber and smoothing that results from sliding of a squeegee on the supplied powder, and a sintering step of irradiating the powder layer with a light beam or electron beam and moving the position of irradiation, are successively repeated in that order to laminate sintered layers,
wherein after dividing shaping regions into a plurality of laminating units along a height direction, a maximum prearranged sintering region, formed by superimposing all of the prearranged sintering regions in each laminating unit of the plurality of laminating units, is used as the basis, and each laminating unit of the plurality of laminating units is divided into an inside region including the maximum prearranged sintering region, and an outside region not including the maximum prearranged sintering region, and
wherein the squeegee sliding speed in the outside region is set to be greater than the sliding speed in the inside region.

2. The three-dimensional object shaping method according to claim 1, wherein each location on the border between the inside region and the outside region has a length of a prescribed distance along a line connecting the center location of the maximum prearranged sintering region and each location on the outer periphery, with respect to the respective locations on the outer periphery of the maximum prearranged sintering region.

3. The three-dimensional object shaping method according to claim 1, wherein the maximum prearranged sintering region and the inside region are equivalent in each of the plurality of laminating units.
